Europäisches Patentamt

European Patent Office

Office européen des brevets

(11) Veröffentlichungsnummer : **0 093 318**
**B1**

(12) **EUROPÄISCHE PATENTSCHRIFT**

(45) Veröffentlichungstag der Patentschrift :
19.08.87

(51) Int. Cl.⁴ : **A 22 C 17/12**

(21) Anmeldenummer : **83103828.6**

(22) Anmeldetag : **20.04.83**

(54) Entschwartungsmaschine.

(30) Priorität : **30.04.82 DE 3216150**

(43) Veröffentlichungstag der Anmeldung :
**09.11.83 Patentblatt 83/45**

(45) Bekanntmachung des Hinweises auf die Patenterteilung : **19.08.87 Patentblatt 87/34**

(84) Benannte Vertragsstaaten :
**AT BE CH FR GB IT LI NL SE**

(56) Entgegenhaltungen :
**FR-A- 1 358 888**
**FR-A- 1 506 534**
**GB-A- 1 136 109**
**GB-A- 2 076 631**

(73) Patentinhaber : **Maja-Maschinenfabrik Hermann Schill GmbH**
**D-7640 Kehl 16 (DE)**

(72) Erfinder : **Schill, Hermann**
**Merkurstrasse 14**
**D-7640 Kehl 16 (DE)**

(74) Vertreter : **Patentanwälte Dipl.-Ing. Hans Schmitt Dipl.-Ing. Wolfgang Maucher**
**Dreikönigstrasse 13**
**D-7800 Freiburg i.Br. (DE)**

## Beschreibung

Die Erfindung betrifft eine Entschwartungsmaschine entsprechend den Merkmalen des Oberbegriffs von Anspruch 1.

Derartige Entschwartungsmaschinen sind bereits bekannt, z. B. durch DE-B-1 278 873. Sie haben sich in der Praxis bewährt und ermöglichen insbesondere ein einfaches Aus- und Einbauen des Klingenhalters. Bezüglich der Bedienbarkeit und des baulichen Aufwandes sind diese vorbekannten Maschinen jedoch noch verbesserungsfähig. Nicht selten haben diese Entschwartungsmaschinen verschiedene Bedienhebel, so daß gegebenenfalls für die Einstellung der Entnahmestellung des Messers zunächt ein erster und ein weiterer Hebel bedient werden muß.

Es besteht daher die Aufgabe, eine Entschwartungsmaschine der eingangs erwähnten Art mit einfacher Verstellmechanik für das Messer sowie bequemer Bedienungsmöglichkeit zu schaffen.

Zur Lösung dieser Aufgabe schlägt die Erfindung bei einer Entschwartungsmaschine der eingangs erwähnten Art die Maßnahmen des Kennzeichnungsteiles des ersten Anspruches vor. Bei einer solchen Maschine kann das Verstellen des Abschwartmessers bzw. seines Klingenhalters mit Hilfe eines einzigen Hebels erfolgen, und zwar auch bis in eine Aushebestellung für den Klingenhalter. Die Messer-Verstellmechanik ist dementsprechend leicht zu handhaben und ihr Aufbau einfach und kompakt. Außerdem ergeben sich nicht nur günstige Hebelverhältnisse, sondern die gesamte Verstelleinrichtung hat nur eine vergleichsweise geringe Bauhöhe, die sich im wesentlichen an der Länge der Aufhängearme orientiert.

Durch die FR-A-1 358 888 ist zwar auch bereits eine Entschwartungsmaschine mit einer Zugwalze und einem verstellbaren Klingenhalter bekannt, der mit Führungsanschlägen zusammenarbeitende Aufhängearme sowie Druckbeaufschlagungselemente aufweist. Bei dieser Entschwartungsmaschine sind jedoch nicht nur die Führungsanschläge und die Druckbeaufschlagungselemente auf der gleichen Seite der Aufhängearme angeordnet, sondern der Klingenhalter ist nur nach Entfernen eines besonderen Haltebolzens abnehmbar.

Weiterbildungen der Erfindung sind in den Unteransprüchen aufgeführt.

Eine besonders zweckmäßige Ausgestaltung der Erfindung gemäß Anspruch 4 ergibt sich dadurch, daß das Messer in unterschiedliche Schwartenstellungen von der Zugwalze abhebbar ist, und daß dazu am Führungsanschlag eine Auflaufkurve für ein Auflaufelement angebracht ist, welches mittels des Exzenters gegenüber der Auflaufkurve bewegbar ist. Durch diese Ausgestaltung kann man das Messer bzw. den Klingenhalter mit Hilfe des Exzenters in unterschiedliche « Schwartenzugstellungen » auf einfache Weise einstellen. Bei der eingangs erwähnten Entschwartungsmaschine nach DE-B-1 278 873 ist zwar auch bereits das Messer bzw. der Klingenhalter in Schwartenzugstellungen verstellbar, jedoch ist dazu ein zusätzlicher, über ein weiteren Handhebel verstellbarer Anschlag erforderlich. Weitere Ausgestaltungen der Erfindung sind in den Unteransprüchen aufgeführt.

Nachstehend wird die Erfindung anhand der Zeichnung noch näher erläutert. Es zeigt:

Figur 1 eine Seitenansicht einer im Schnitt gehaltenen bzw. halbseitig dargestellten Speckentschwartungsmaschine,

Figur 2 eine perspektivische Rückansicht einer Speckentschwartungsmaschine bei abgenommenem Klingenhalter und abgenommenem Ablauftisch,

Figur 3 eine Aufsicht der in Fig. 2 gezeigten Maschine, jedoch mit eingesetztem Ablauftisch,

Figur 4 eine Schnittdarstellung gemäß Linie IV-IV in Fig. 2 einer nur zum Teil im Bereich der Zugwalze sowie des Messers dargestellte Entschwartungsmaschine mit in Arbeitsausgangsstellung befindlichem Klingenhalter,

Figur 5 eine etwa Fig. 4 entsprechende Darstellung, hier jedoch mit in Schwartenzugstellung befindlichem Klingenhalter und

Figur 6 eine den Fig. 4 und 5 entsprechende Darstellung, hier jedoch mit in Aushebestellung befindlichem Klingenhalter.

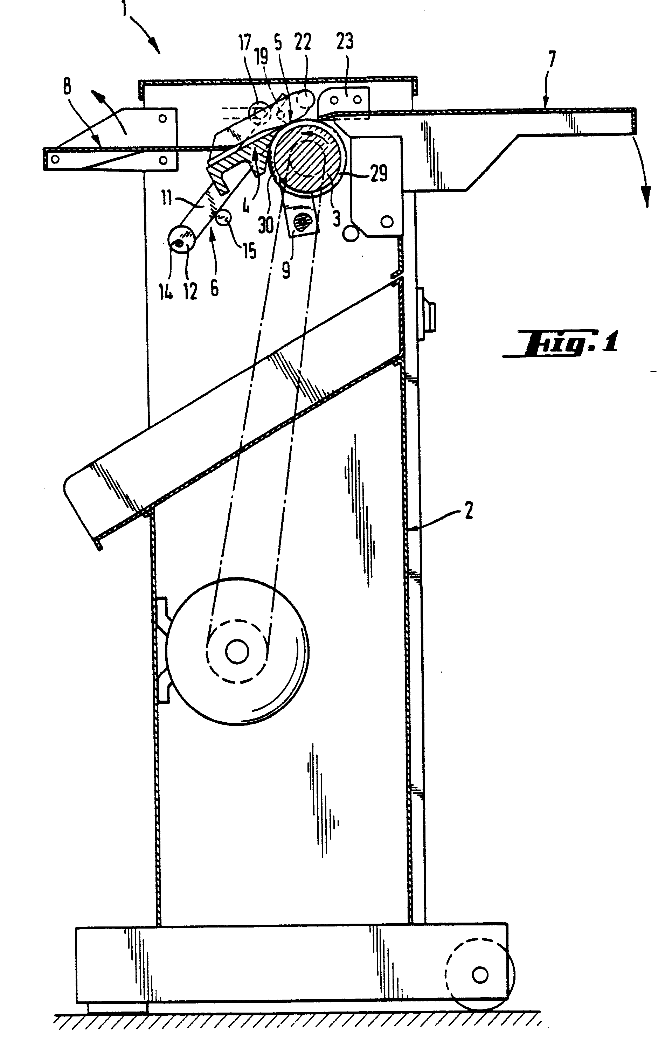

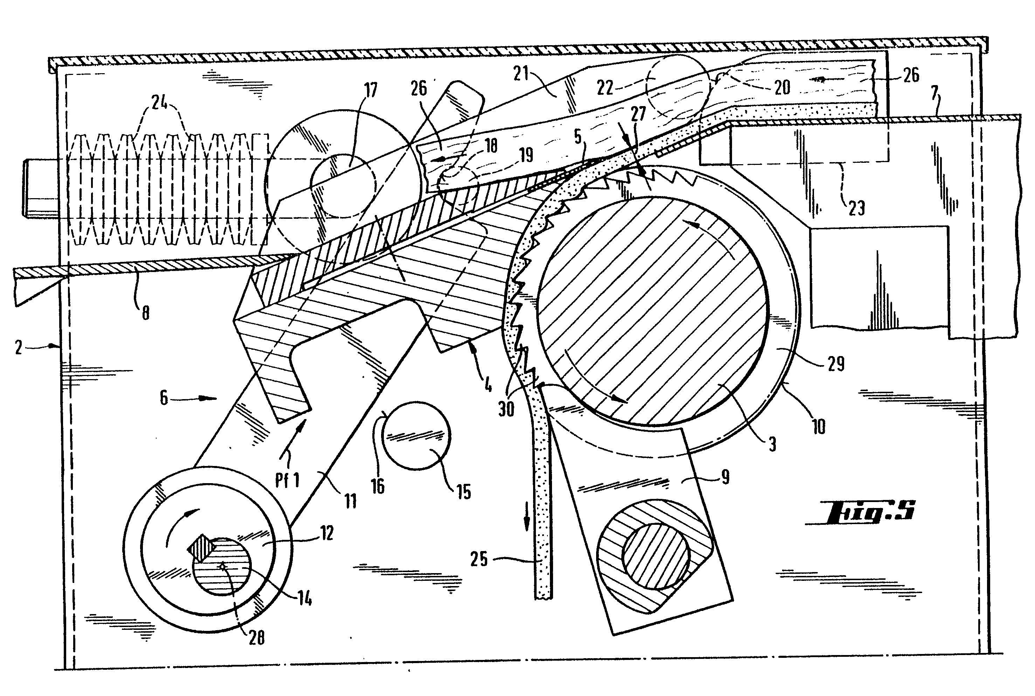

Eine Speckentschwartungsmaschine 1 (Fig. 1) weist ein Standgehäuse 2 auf, an dessen oberen Bereich sich die Einrichtungen zum Speckentschwarten befinden. Es sind dies im wesentlichen eine Zugwalze 3, ein in einem Klingenhalter 4 befestigtes Abschwartmesser 5 sowie eine im ganzen mit 6 bezeichnete Verstelleinrichtung, mittels der das Abschwartmesser 5 in unterschiedliche Stellungen relativ zu der Zugwalze 3 gebracht werden kann. Das Abschwartgut 24, 25 wird über einen Zuführtisch 7 in den Bereich der Zugwalze 3 sowie auch in den Bereich des Abschwartmessers 5 geführt. Die abgetrennte Schwarte 25 wird dann unterhalb des Messers 5 abgeführt, während der Speck 26 oberhalb des Messers 5 zu einem Ablauftisch 8 gelangt (Fig. 5). Unterhalb der Zugwalze 3, welche Riffelungen 30 aufweist, ist noch ein in Nuten 29 eingreifender Abstreifer 9 zu erkennen, durch den an der Zugwalze 3 anhaftende Schwarte 25 abgestreift werden kann.

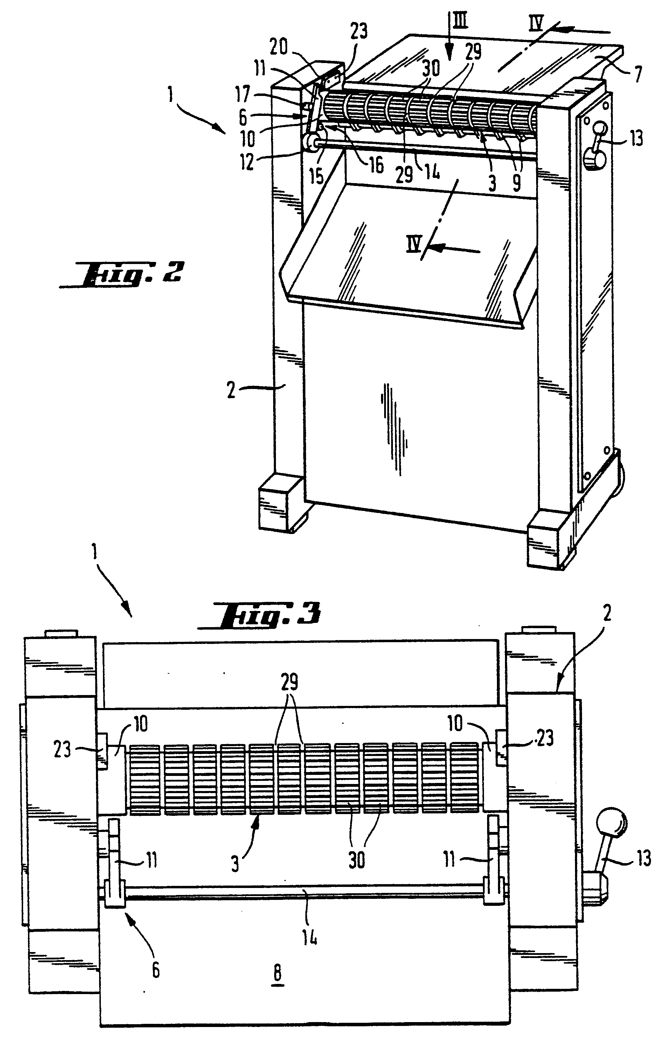

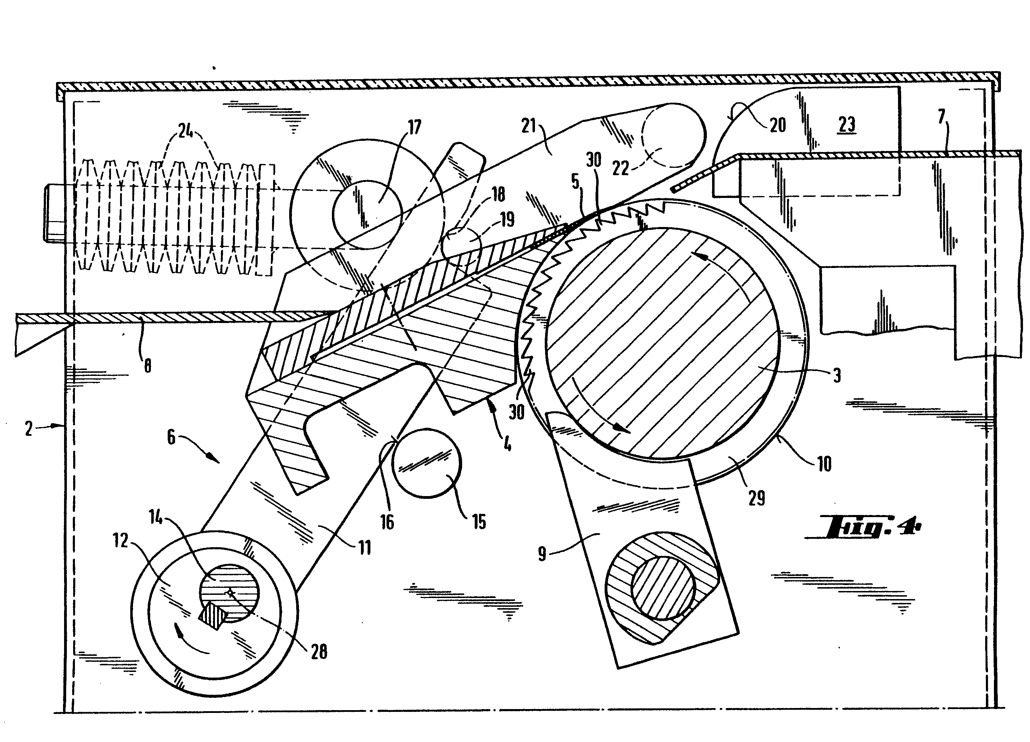

Das Abschwartmesser 5 ist zu der Zugwalze 3 hin druckbeaufschlagt und hebt von der Zugwalze 3 während des Abschwartens entsprechend der Dicke der Schwarte 25 von der Zugwalze 3 ab (Fig. 5). Das Messer 5 wird vor dem Zuführen des Abschwartgutes 25, 26 mit ganz geringem Abstand zu der Zugwalzenoberfläche gehalten. Dazu sind an beiden Enden der Zugwalze 3 Auflageringe 10 (Fig. 3 und 4) vorgesehen, auf denen entsprechende Stützelemente des Klingenhalters 4 in Ausgangslage aufliegen.

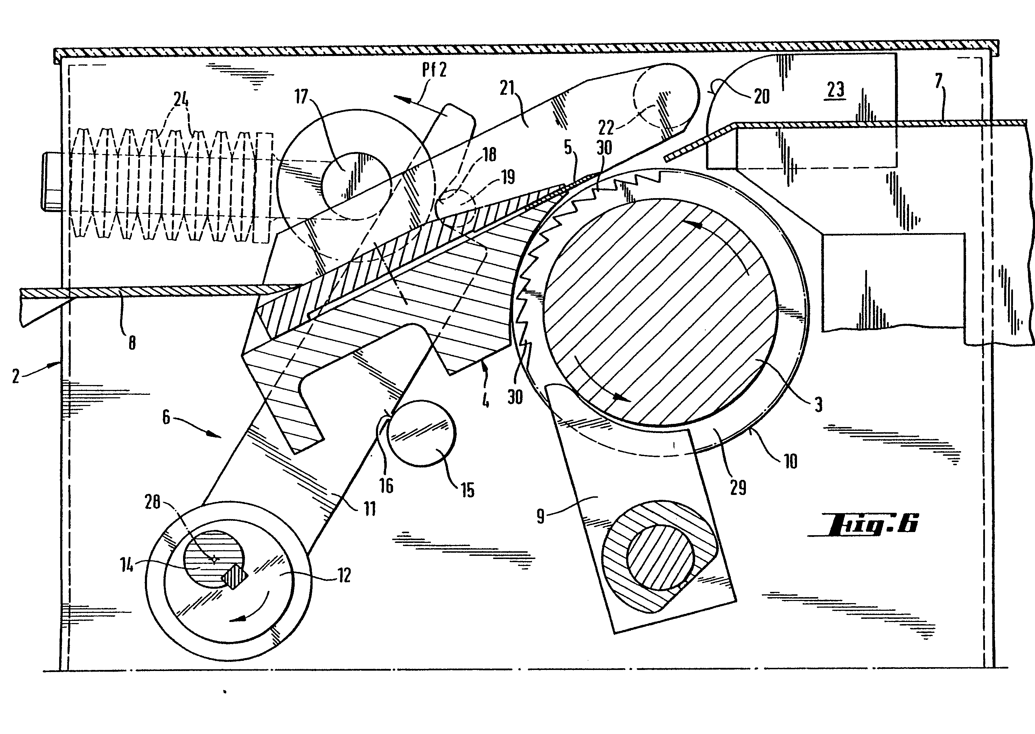

Durch die Verstelleinrichtung 6 kann einerseits der Klingenhalter 4 in Arbeitsausgangsstellung (Fig. 4) sowie in eine Aushebestellung (Fig. 6) gebracht werden. Außerdem ist im Ausführungsbeispiel noch eine sogenannte Schwartenzugstellung vorgesehen (vgl. Fig. 5), in der das Messer 5 zu der Zugwalze 3 einen gewissen Abstand 27 hat. Die Mechanik dieser Verstelleinrichtung 6 ist insbesondere in den Fig. 4 bis 6 gut erkennbar. Die hier dargestellten Teile befinden sich bei einem Ende der Zugwalze 3 und sind symmetrisch auf der gegenüberliegenden Seite in gleicher Weise nochmals vorhanden.

Für die Halterung des Klingenhalters 4 sind Aufhängearme 11 vorgesehen, die durch einen Exzenter 12 gleichzeitig verschwenkbar und auch in Längsrichtung verschiebbar gelagert sind. Der Exzenter 12 kann durch einen Handehebel 13 (Fig. 2 und 3) verstellt werden. Die an den beiden Gehäuseseiten vorgesehenen Exzenter 12 mit daran befestigten Aufhängearmen 11 sind über eine Exzenterwelle 14 miteinander verbunden. Im Bereich der Aufhängearme 11 ist jeweils noch ein durch einen Stützbolzen 15 gebildeter erster Führungsanschlag 16 vorgesehen. Außerdem greifen an den Aufhängearmen 11 Druckbeaufschlagungselemente 17 an. Die Lagerung 28 der Exzenter 12 befindet sich unterhalb, seitlich abgesetzt von der Zugwalze 3 und die Aufhängearme 11 verlaufen unter einem Winkel von etwa 35° zu der Zugwalze 3 hin, wobei vorgesehene Aufnahme-Ausnehmungen 18 für Einhängebolzen 19 des Klingenhalters 4 sich etwa bei der Oberseite der Zugwalze 3 befinden. Die Aufhängearme 11 sind somit im wesentlichen tangential mit Abstand zu der Zugwalze 3 angeordnet. Der Stützbolzen 15 befindet sich an der der Zugwalze 3 zugewandten Längsseite des Aufhängearmes 11, während auf der anderen, gegenüberliegenden Seite, etwa in der Höhe der Ausnehmungen 18, das Druckbeaufschlagungselement 17 angreift. In der Arbeitsausgangsstellung (Fig. 4) und auch in Schwartenzugstellung (Fig. 5) sind die Aufhängearme 11 abgehoben gegenüber den ersten Führungsanschlägen 16 der Stützbolzen 15. Die Aufhängearme 11 befinden sich bei etwa an der Zugwalze 3 anliegendem Messer 5 neben dem ersten Führungsanschlag 16 (Fig. 4/ Fig. 5). Wird nun der Exzenter 12 in die in Fig. 6 gezeigte Lage verdreht, so bilden die Stützbolzen 15 praktisch wippenauflagenartige erste Führungsanschläge 16, um die die Aufhängearme 11 beim Verstellen des Exzenters 12 in die Aushebelage verkippen. Dabei verschwenken die oberen, den Klingenhalter 4 haltenden Enden der Auflagearme 11 entgegen der Druckbeaufschlagung durch das Element 17 (Pfeil Pf 2). Das Messer 5 mit dem Klingenhalter 4 hebt dadurch von der Zugwalze 3 ab und wird schließlich in Freigabestellung verschwenkt. Der Klingenhalter 4 kann dann schräg nach oben entnommen werden. Umgekehrt kann nach dem Einsetzen des Klingenhalters 4 durch Verdrehen des Exzenters 12 um etwa 90° in Arbeitsausgangsstellung (Fig. 4) verfahren werden.

Neben der vorbeschriebenen Arbeitsausgangsstellung kann das Messer 5 bei dieser Speckentschwartungsmaschine 1 auch noch in Schwartenzugstellung verstellt werden. Dabei wird die sich durch die Exzenterlagerung 12 ergebende Lageverschiebung auch in Längsrichtung der Aufhängearme 11 mitausgenützt. Ausgehend von der Arbeitsausgangsstellung gemäß Fig. 4 erfolgt durch Verdrehen des Exzenters 12 im Uhrzeigersinn auch eine Verschiebebewegung der Aufhängearme 11 gemäß dem Pfeil Pf 1. Im Verlauf dieser Bewegung läuft der Klingenhalter 4 auf eine feststehende Auflaufkurve 20 auf, die so angeordnet ist, daß das Messer 5 in erwünschtem Maße von der Zugwalze 3 abgehoben wird (Fig. 5). Der Klingenhalter 4 weist dazu etwa seitlich seines Arbeitsbereiches Seitenarne 21 auf, die mit Abstand zu den Einhängebolzen 19 angeordnete Auflaufelemente 22 tragen. Insbesondere sind diese Auflaufelemente 22 wegen des günstigeren Hebelarmes an über die Schneidebene des Messers 5 hinausragenden Verlängerungen der Seitenamre 21 angeordnet. Die Auflaufkurven 20 sind am weiteren, feststehenden zweiten Führungsanschlägen 23 vorgesehen. Durch diese Anordnung können in vorteilhafter Weise die für den Betrieb der Maschine 1 notwendigen Bedienungen nicht nur im wesentlichen mittels eines Handhebels 13 vorgenommen werden, sondern es ist dabei auch eine zwangsläufige Funktionsfolge vorhanden, durch die sowohl eine umständliche Handhabung als auch Fehlbedienungen vermieden werden.

Die Auflaufelemente 22 sind in Ausführungsbeispiel durch Auflaufrollen gebildet. Die Stellung der Auflaufkurve 20 sowie der durch den Exzenter 12 vorgegebene Verschiebeweg sind auf den vorgesehenen Hub des Messers 5 für die Schwartenzugstellungen abgestimmt. Dies könnte auf einfache Weise durch Austauschen der zweiten Führungsanschläge 23 mit anderen Auflaufkurven 20 gegebenenfalls verändert werden.

Die etwa beim freien, oberen Ende der Aufhängearme 11 angreifenden Druckbeaufschlagungselemente 17 stehen mit Druckelementen, im Ausführungsbeispiel Federpaketen aus Tellerfedern 24 in Verbindung.

Die Vorspannung des Abschwartmessers 5 in Richtung zu der Zugwalze 3 kann durch Anzahl, Art oder Verstellung der Tellerfedern 24 gegebenenfalls verändert werden. Erwähnt sei noch, daß die Auflaufelemente 22 gegebenenfalls auch, bei entsprechender Ausbildung und Halterung des Klingenhalters 4, auch unmittelbar an den Aufhängearmen 11 vorgesehen sein können und z. B. durch dessen freie Enden selbst gebildet sein.

Bei der erfindungsgemäßen Verstelleinrichtung 6 ergibt sich beim Betätigen des Handhebels 13 für die Exzenter 12 folgende Funktionsfolge : Ausgehend von der Aushebestellung (Fig. 6) wird zunächst der Klingenhalter 4 mit seinen Einhängebolzen 19 in die Aufnahme-Ausnehmungen 18 der Aufhängearme 11 eingesetzt. Anschließend wird der Exzenter 12 im Uhrzeigersinn um ca. 90° verdreht, wobei die Aufhängearme 11 bei geringfügigen Längsverschiebebewegungen um die Stützbolzen 15 kippen, bis entsprechende Stützelemente am Klingenhalter 4 an den seitlichen Auflageringen 10 der Zugwalze 3 aufliegen. Das Abschwartmesser 5 befindet sich dann in der normalen Arbeitsausgangsstellung (Fig. 4). Beim weiteren Verdrehen des Exzenters 12 im Uhrzeigersinn erfolgt die Verschiebung der Aufhängearme gemäß dem Pfeil Pf 1 bis die Auflaufelemente 22 auf die Auflaufkurven 20 auftreffen. Beim weiteren Verdrehen des Exzenters erfolgt dann gemäß dem Verlauf der Auflaufkurve 20 ein Abheben des Abschwartmessers 5 von der Zugwalze 3. In Fig. 5 ist die maximal vorgesehene Schwartenzugstellung dargestellt, wobei jedoch durch weiteres Verdrehen des Exzenters um weitere 90° noch eine Stellung des Messers mit größerem Abstand erreichbar wäre. Im Ausführungsbeispiel ist zwischen der Aushebestellung und der vorgesehenen maximalen Schwartenzugstellung ein Verdrehwinkel des Exzenters 12 von etwa 180° vorgesehen. An diesen Endstellungen sind Verdrehanschläge angeordnet.

**Patentansprüche**

1. Entschwartungsmaschine (1), insbesondere zum Speckentschwarten, mit einer Zugwalze (3) zum Transportieren des Abschwartgutes (25, 26) sowie einem mittels Handhebel (13) relativ dazu verstellbaren Abschwartmesser (5), das gegen die Zugwalze andrückbar ist, wobei zum Verstellen des Messers (5) eine mit Exzentern (12) versehene Verstelleinrichtung (6) mit einer verschwenkbaren sowie gleichzeitig verschiebbaren Halterung (11, 12, 14) für einen Klingenhalter (4) vorgesehen ist, wobei diese Verstelleinrichtung (6) Führungsanschläge (16, 23), Druckbeaufschlagungselemente (17) und auf den Exzentern (12) gelagerte Aufhängearme (11) hat, und wobei die an ihrem freien Ende im wesentlichen tangential und mit Abstand zur Zugwalze (3) angeordneten Aufhängearme (11) zur Zugwalze (3) weisende Ausnehmungen (18) zur Aufnahme für am Klingenhalter (4) befindliche Einhängebolzen (19) haben, dadurch gekennzeichnet, daß jedem Aufhängearm (11) mindestens ein erster Führungsanschlag (16) sowie eventuell zweite Führungsanschläge (23) zugeordnet sind, daß die ersten Führungsanschläge (16) für die Aufhängearme (11) eine Wippenauflage bilden, um welche jeweils ein Aufhängearm (11) beim Verstellen des Exzenters (12) in seine Aushebelage (Fig. 6) verkippbar ist, wobei die mit dem Standgehäuse (2) verbundenen ersten Führungsanschläge (16) an der der Zugwalze (3) zugewandten Seite der Aufhängearme (11) und die mit dem Standgehäuse (2) verbundenen Druckbeaufschlagungselemente (17) auf der anderen, der Zugwalze (3) abgewandten Seite der Aufhängearme (11) angeordnet sind, und wobei jeder erste Führungsanschlag (16) in Arbeitsstellung des Messers (5) bezüglich den Aufhängearmen (11) außer Eingriff und derart angeordnet ist, daß er sich in Arbeitsstellung, bei etwa an der Zugwalze (3) anliegendem Messer (5) unmittelbar neben dem jeweiligen Aufhängearm (11) befindet.

2. Maschine nach Anspruch 1, dadurch gekennzeichnet, daß jeder erste Führungsanschlag (16) etwa im Mittelbereich der Aufhängearme (11) angeordnet ist.

3. Maschine nach Anspruch 1 oder 2, dadurch gekennzeichnet, daß der Verstellwinkel am Exzenter (12) zwischen der normalen Arbeitsstellung des Messers (5) bzw. des Klingenhalters (4) und der Aushebestellung etwa 90° beträgt.

4. Maschine nach einem der Ansprüche 1 bis 3, dadurch gekennzeichnet, daß das Messer (5) in unterschiedliche Schwartenzugstellungen von der Zugwalze (3) abhebbar ist, und daß dazu am zweiten Führungsanschlag (23) eine Auflaufkurve (20) für ein Auflaufelement (22) angebracht ist, welches mittels des Exzenters (12) gegenüber der Auflaufkurve (20) bewegbar ist.

5. Maschine nach einem der Ansprüche 1 bis 4, dadurch gekennzeichnet, daß der bzw. die Führungsanschläge (23) feststehend ausgebildet sind.

6. Maschine nach Anspruch 4 oder 5, dadurch gekennzeichnet, daß das Auflaufelement (22) jeweils unmittelbar an den Aufhängearmen (11) vorgesehen und vorzugsweise durch dessen freies Ende selbst gebildet ist.

7. Maschine nach einem der Ansprüche 4 bis 6, dadurch gekennzeichnet, daß die Auflaufelemente (22) am Klingenhalter (4) vorgesehen sind.

8. Maschine nach einem der Ansprüche 4 bis 7, dadurch gekennzeichnet, daß der Klingenhalter (4) jeweils etwa seitlich seines Arbeitsbereiches Seitenarme (21) aufweist, die mit Abstand zu den Einhängebolzen (19) angeordnete Auflaufelemente (22) tragen, vorzugsweise an über die Schneidebene des Messers (5) hinausragenden Verlängerungen der Seitenarme (21).

9. Maschine nach einem der Ansprüche 4 bis 8, dadurch gekennzeichnet, daß die Auflaufelemente (22) durch Auflaufrollen od. dgl. gebildet sind.

10. Maschine nach einem der Ansprüche 4 bis 9, dadurch gekennzeichnet, daß die Auflaufkurven (20) der weiteren Führungsanschläge (23) sowie der durch den Exzenter (12) vorgegebene Verschiebeweg auf den vorgesehenen Hub des Abschwartmessers (5) für die Schwartenzugstellungen abgestimmt sind.

11. Maschine nach einem der Ansprüche 1 bis 10, dadurch gekennzeichnet, daß die vorzugsweise beim freien, oberen Ende der Aufhängearme (11) angreifenden Druckbeaufschlagungselemente (17) für die Vorspannung des Messers (5) in Richtung zu der Zugwalze (3) im wesentlichen durch Druckbolzen gebildet sind, die mit Druckelementen, vorzugsweise Federn, insbesondere Federpaketen aus Tellerfedern (24) in Verbindung stehen.

12. Maschine nach einen der Ansprüche 1 bis 11, dadurchgekennzeichnet, daß die Messer-Vorspannung verstellbar ist.

## Claims

1. A derinding machine (1), in particular for derinding bacon, including a feed roll (3) for transporting the material (25, 26) to be derinded as well as a derinding knife (5) which is adapted to be adjusted relative thereto by means of a hand lever (13) and to be urged against the feed roll, for adjusting the knife (5) there being an adjusting means (6) provided with eccentrics (12) and including a device (11, 12, 14) which serves to hold a blade support (4) and is adapted to be swivelled and simultaneously slid, said adjusting means (6) including guide stops (16, 23), elements (17) for applying pressure and mounting arms (11) mounted on the eccentrics (12), the mounting arms (11) which are disposed at their free end to be in essentially tangential and spaced relationship to the feed roll (3) having recesses (18) which point towards the feed roll (3) and serve to receive bolts (19) located on the blade support (4), characterized in that at least one first guide stop (16) and possibly second guide stops (23) are associated with each mounting arm (11), that the first guide stops (16) form a rocker bearing for the mounting arms (11) about which in each case one mounting arm (11) can be tilted into its position of withdrawal (Fig. 6) as the eccentric (12) is adjusted, the first guide stops (16) connected to the column (2) being disposed on the side of the mounting arms (11) facing the feed roll (3) and the elements (17) for applying pressure connected to the column (2) being disposed on the other side of the mounting arms (11) averted from the feed roll (3), in the working position of the knife (5) each first guide stop (16) being disposed with respect to the mounting arms (11) in a detached condition in such a manner that in the working position said guide stop is directly adjacent to the respective mounting arm (11) when the knife (5) is resting approximately against the feed roll (3).

2. The machine as claimed in claim 1, characterized in that each first guide stop (16) is disposed approximately in the centre zone of the mounting arms (11).

3. The machine as claimed in claim 1 or claim 2, characterized in that the angle of adjustment at the eccentric (12) between the normal working position of the knife (5) or of the blade support (4) and the position of withdrawal is about 90°.

4. The machine as claimed in any one of claims 1 to 3, characterized in that the knife (5) is adapted to be lifted off the feed roll (3) for various derinding positions and that for this purpose the second guide stop (23) is provided with a lifting flank (20) for a lifting element (22) adapted to be moved relative to said lifting flank (20) by means of the eccentric (12).

5. The machine as claimed in any one of claims 1 to 4, characterized in that the guide stop(s) (23) are devised so as to be stationary.

6. The machine as claimed in claim 4 or claim 5, characterized in that the lifting element (22) is in each case provided directly on the mounting arms (11) and is preferably formed by the free end thereof.

7. The machine as claimed in any one of claims 4 to 6, characterized in that the lifting elements (22) are provided on the blade support (4).

8. The machine as claimed in any one of claims 4 to 7, characterized in that the blade support (4) has in each case at approximately the side of its working zone lateral arms (21) bearing lifting elements (22) disposed in spaced relationship to the bolts (19), preferably on extensions of the lateral arms (21) projecting beyond the cutting plane of the knife (5).

9. The machine as claimed in any one of claims 4 to 8, characterized in that the lifting elements (22) are in the form of rollers of the like.

10. The machine as claimed in any one of claims 4 to 9, characterized in that the lifting flanks (20) of the further guide stops (23) and the sliding path given by the eccentric (12) are coordinated with the lifting of the derinding knife (5) for the derinding positions.

11. The machine as claimed in any one of claims 1 to 10, characterized in that the elements (17) for applying pressure which preferably engage the free upper end of the mounting arms (11) for pretensioning the knife (5) in the direction towards the feed roll (3) are essentially formed by thrust bolts connected to pressure elements, preferably springs, in particular sets thereof composed of plate springs (24).

12. The machine as claimed in any one of claims 1 to 11, characterized in that the pretensioning of the knife is adjustable.

## Revendications

1. Machine à découenner (1), en particulier pour le découennage du lard, munie d'un cylindre de traction (3) pour le transport du produit à découenner (25, 26) ainsi que d'un couteau à découenner (5) réglable relativement à celui-ci au moyen d'un levier à main (13), qui peut être poussé contre le cylindre de traction, dans laquelle est prévu pour le réglage du couteau (5) un dispositif de réglage (6) muni d'excentriques (12) avec une monture (11, 12, 14) pouvant pivoter et coulisser simultanément pour un portelame (4), ce dispositif de réglage (6) présentant des butées de guidage (16, 23), des éléments d'application de pression (17) et des bras de suspension (11) montés sur les excentriques, et les bras de suspension (11) disposés à leur extrémité pratiquement tangentiellement au cylindre de traction (3) et avec espacement présentant des évidements (18) tournés vers le cylindre de traction (3) pour le logement de goujons d'accrochage (19) situés sur le porte-lame (4), caractérisée en ce qu'à chaque bras de suspension (11) est adjointe au moins une première butée de guidage (16) ainsi qu'éventuellement des deuxièmes butées de guidage (23), en ce que les premières butées de guidage (16) forment pour les bras de suspension (11) un appui à bascule autour duquel un bras de suspension (11) peut chaque fois basculer à sa position d'écartement lorsqu'on modifie le réglage de l'excentrique (12) les premières butées de guidage reliées au bâti (2) étant disposées du côté des bras de suspension (11) qui est tourné vers le cylindre de traction et les éléments d'application de pression (17), reliés au bâti (2), de l'autre côté des bras de suspension (11), opposé au cylindre de traction et chaque première butée de guidage (16) étant hors de coopération dans la position de travail du couteau (5) relativement aux bras de suspension et étant disposée de telle sorte que dans la position de travail, le couteau (5) étant à peu près appliqué contre le cylindre de traction (3), elle se trouve immédiatement à côté du bras de suspension (11) dont il s'agit.

2. Machine selon la revendication 1, caractérisée en ce que chaque première butée de guidage (16) est disposée à peu près dans la région centrale des bras de suspension (11).

3. Machine selon l'une des revendications 1 et 2, caractérisée en ce que l'angle de réglage sur l'excentrique (12), entre la position normale de travail du couteau (5) ou du porte-lame (4) et la position d'écartement, est d'environ 90°.

4. Machine selon l'une des revendications 1 à 3, caractérisée en ce que le couteau (5) peut être soulevé du cylindre de traction (3) en différentes positions de traction de couenne, et en ce qu'à cet effet, sur la deuxième butée de guidage (23) est disposée une came d'accès (20) pour un élément d'accès (22) qui peut être déplacé relativement à la came d'accès (20) au moyen de l'excentrique (12).

5. Machine selon l'une des revendications 1 à 4, caractérisée en ce que la ou les butées de guidage (23) sont conçues de façon fixe.

6. Machine selon l'une des revendications 4 et 5, caractérisée en ce que l'élément d'accès (22) est chaque fois prévu directement sur les bras de suspension (11) et, de préférence, est formé par l'extrémité libre elle-même de ceux-ci.

7. Machine selon l'une des revendications 4 à 6, caractérisée en ce que les éléments d'accès (22) sont prévus sur le porte-lame (4).

8. Machine selon l'une des revendications 4 à 7, caractérisée en ce que le porte-lame (4) présente chaque fois, sur le côté de sa région de travail, des bras latéraux (21) qui portent des éléments d'accès (22) disposés avec espacement relativement aux goujons d'accrochage (19), de préférence sur des prolongements des bras latéraux (21) dépassant le plan de coupe du couteau (5).

9. Machine selon l'une des revendications 4 à 8, caractérisée en ce que les éléments d'accès (22) sont formés par des galets d'accès ou analogues.

10. Machine selon l'une des revendications 4 à 9, caractérisée en ce que les cames d'accès des autres butées de guidage (23) ainsi que la course de coulissement fixée par l'excentrique (12) sont harmonisées avec la course prévue du couteau à découenner (5) pour les positions de traction de la couenne.

11. Machine selon l'une des revendications 1 à 10, caractérisée en ce que les éléments d'application de pression (17) pour la précharge du couteau (5) en direction du cylindre de traction (3), s'appliquant, de préférence, à l'extrémité supérieure libre des bras de suspension (11), sont essentiellement formés par des goujons de pression qui sont en liaison avec des éléments de pression, de préférence des ressorts, en particulier des paquets de ressorts formés de ressorts Belleville (24).

12. Machine selon l'une des revendications 1 à 11, caractérisée en ce que la précharge du couteau est réglable.

**Fig. 1**

**Fig. 2**

**Fig. 3**

Fig. 4

0 093 318

Fig.5

0 093 318

Fig.6

0 093 318